# DEMANDE DE BREVET EUROPEEN

(11) **EP 4 197 989 A1**
(43) Date de publication de la demande: **21.06.2023**
(21) Numéro de dépôt: 22214718.3
(22) Date de dépôt: 19.12.2022
(51) Int. Cl.: C04B 37/00, C04B 37/02, F25B 21/00

(54) **PROCÉDÉ D'ASSEMBLAGE PAR BRASAGE D'UNE PIÈCE EN CÉRAMIQUE DE GRENAT DE GALLIUM SUR UNE PIÈCE MÉTALLIQUE OU SUR UNE AUTRE PIÈCE EN CÉRAMIQUE DE GRENAT DE GALLIUM**

(30) Priorité: 20.12.2021 FR 2113988
(71) Demandeur: Commissariat à l'énergie atomique et aux énergies alternatives, 75015 Paris (FR)
(72) Inventeur: CAMARA, Nimbo-Robert, 38300 Bourgoin (FR); MARIN, Christophe, 38054 GRENOBLE CEDEX 09 (FR); CHAUMAT, Valérie, 38054 GRENOBLE CEDEX 09 (FR); VOYTOVYCH, Rayisa, 38130 ECHIROLLES (FR); DUVAL, Jean-Marc, 38054 GRENOBLE CEDEX 09 (FR); DURAND, Jean-Louis, 38054 GRENOBLE CEDEX 09 (FR)
(74) Mandataire: Brevalex

(57) **Abrégé**

Procédé d'assemblage par brasage d'une première pièce (10) en céramique de grenat de gallium et d'une deuxième pièce (20) en cuivre ou en céramique de grenat de gallium, le procédé comprenant les étapes suivantes :
a) nettoyer la première pièce (10) en céramique de grenat de gallium et/ou la deuxième pièce (20) en cuivre ou en céramique de grenat de gallium,
b) mettre en contact un alliage d'apport (30) avec la première pièce (10) et avec la deuxième pièce (20), l'alliage d'apport (30) étant un alliage Ag-Cu contenant en outre de 0,5% à 6% en poids de titane,
c) chauffer l'ensemble obtenu jusqu'à une température supérieure à la température du liquidus de l'alliage d'apport (30), de manière à faire fondre l'alliage d'apport (30), puis refroidir l'ensemble jusqu'à une température inférieure à la température du liquidus de l'alliage d'apport (30), et de préférence jusqu'à la température ambiante.

## Description

### DOMAINE TECHNIQUE

La présente invention se rapporte au domaine général des procédés d'assemblage.

L'invention concerne un procédé d'assemblage hétérogène d'une pièce en grenat de gallium et d'une pièce en cuivre ainsi qu'un procédé d'assemblage homogène de deux pièces en grenat de gallium.

L'invention concerne également un assemblage comprenant une première pièce en grenat de gallium et une deuxième pièce en cuivre ou en grenat de gallium.

L'invention concerne également un dispositif de refroidissement, par exemple un réfrigérateur à désaimantation adiabatique comprenant un tel assemblage.

L'invention est particulièrement intéressante puisqu'elle permet de fabriquer des assemblages homogènes ou hétérogènes ayant des interfaces fortes et donc présentant de bonnes propriétés mécaniques.

L'invention trouve des applications dans de nombreux domaines industriels, et notamment dans le domaine de l'énergie, du spatial et de la cryogénie.

### ÉTAT DE LA TECHNIQUE ANTÉRIEURE

L'utilisation de matériau paramagnétique, et notamment l'utilisation de grenat sous forme cristalline ou sous forme de céramique, est particulièrement intéressante pour fabriquer des dispositifs de refroidissement. L'effet frigorifique est obtenu en associant le matériau paramagnétique (dit magnétocalorique) à un champ magnétique externe variable.

Généralement, le matériau paramagnétique est assemblé à un élément métallique (bus thermique) pour améliorer la conduction thermique et le fonctionnement du dispositif.

Dans le document EP 3 671 065 A1, il est indiqué que l'assemblage d'une céramique de grenat de gallium et d'une pièce métallique en cuivre peut être réalisé par collage avec une colle époxy ou par brasage. L'utilisation d'une colle époxy est simple à mettre oeuvre, mais la conductivité thermique de l'assemblage obtenu n'est pas suffisante pour des dispositifs de refroidissement. Ce document ne décrit pas le procédé de brasage ni la brasure pouvant être utilisée.

Le brasage d'un système hétérogène céramique/métal peut être abordé suivant deux approches.

La première approche consiste à métalliser la céramique afin de faciliter son mouillage par l'alliage d'apport ou brasure. Toutefois, le processus de métallisation de la céramique est complexe et couteux, puisqu'il se fait en plusieurs étapes alternant dépôts et traitements thermiques.

La seconde approche consiste à réaliser un brasage dit actif. Ce type de brasage utilise une brasure contenant un élément réactif (tel que Ti, Zr) qui favorise le mouillage de la céramique. L'avantage du brasage actif réside dans le fait qu'il ne nécessite qu'une seule étape et donc qu'un seul cycle de traitement thermique.

Par exemple dans l'article de S. Gambaro et al. ('Brazing transparent YAG to Ti6Al4V: reactivity and characterization', Journal of the European Ceramic Society 36 (2016) 4185-4196), un grenat d'Aluminium est brasé avec une pièce en alliage Ti6Al4V. Ce brasage est mis en oeuvre sous flux d'argon à des températures comprises entre 850°C et 1050°C avec les brasures suivantes : Ag, eutectique AgCu à 780°C et AgCuTi de composition 70,5% Ag 26,5%Cu et 3%Ti (% en poids). Cette étude vise à assembler des fenêtres optiques étanches au vide pour une application dans la marine.

Cependant, l'une des difficultés majeures liées au brasage impliquant le grenat de gallium ytterbium à des températures supérieures à 800°C est la variation de son taux d'oxygène même lorsqu'il est traité en atmosphère inerte, en atmosphère réductrice ou sous vide secondaire. L'oxygène libéré lors du procédé de brasage peut modifier la pression partielle d'oxygène et donc influencer les réactions chimiques à l'interface métal/grenat. Cette particularité est aussi présente chez certains grenats d'aluminium. Cependant, elle s'opère à plus haute température (typiquement vers 1200°C).

A ce jour, il n'existe aucune donnée dans la littérature concernant le brasage d'une céramique de grenat de gallium sur du cuivre.

### EXPOSÉ DE L'INVENTION

Un but de la présente invention est de proposer un procédé d'assemblage hétérogène d'une céramique de grenat de gallium sur une pièce en cuivre, ou un procédé d'assemblage homogène de deux céramiques de grenat de gallium remédiant aux inconvénients de l'art antérieur et en particulier un procédé permettant de former un assemblage avec une bonne tenue mécanique et une bonne conductivité thermique.

Pour cela, la présente invention propose un procédé d'assemblage par brasage d'une première pièce en céramique de grenat de gallium et d'une deuxième pièce en cuivre ou en céramique de grenat de gallium, le procédé comprenant les étapes suivantes :
a) nettoyer la première pièce en céramique de grenat de gallium et/ou la deuxième pièce en cuivre ou en céramique de grenat de gallium,
b) mettre en contact un alliage d'apport avec la première pièce et avec la deuxième pièce, l'alliage d'apport étant un alliage Ag-Cu contenant en outre de 0,5% à 6% en poids de titane, et de préférence de 0,5% à 5% en poids de titane,
c) chauffer l'ensemble obtenu jusqu'à une température supérieure à la température du liquidus de l'alliage d'apport, de manière à faire fondre l'alliage d'apport, puis refroidir l'ensemble jusqu'à une température inférieure à la température du liquidus de l'alliage d'apport, et de préférence jusqu'à la température ambiante.

L'invention se distingue fondamentalement de l'art antérieur par l'utilisation d'une brasure dont la composition chimique est un alliage Ag-Cu-Ti. Il s'agit d'un brasage dit actif. La brasure (aussi nommée alliage d'apport) assure une continuité métallurgique entre la première pièce en céramique de type grenat et la deuxième pièce.

Les réactions mises en jeu lors du brasage entre une céramique de grenat de gallium et une pièce en cuivre sont très complexes et très sensibles d'une part à la concentration en titane dans la brasure et d'autre part à la durée en phase liquide. La formation de liaisons fortes aux interfaces, nécessaire pour une bonne tenue mécanique, dépend fortement de ces paramètres.

La présente invention permet de former un assemblage avec une bonne tenue mécanique.

Selon une première variante de réalisation, l'assemblage est un assemblage hétérogène céramique de grenat/cuivre.

Avantageusement, la première pièce est une céramique de grenat de gallium gadolinium et la deuxième pièce est en cuivre.

Avantageusement, la première pièce est une céramique de grenat de gallium ytterbium et la deuxième pièce est en cuivre.

Les interfaces sont fortes, malgré la différence de comportement mécanique entre la céramique de grenat et la pièce métallique en cuivre.

Avantageusement, le procédé d'assemblage hétérogène par brasage d'une céramique de grenat de gallium sur une pièce en cuivre est mis en oeuvre à une température d'assemblage comprise entre 800°C et 900°C.

Selon une deuxième variante de réalisation, l'assemblage est un assemblage homogène céramique de grenat/céramique de grenat.

Ceci permet de fabriquer des pièces de forme complexe de grenat de gallium par brasage de plusieurs pièces les unes sur les autres.

Les céramiques de grenat assemblées peuvent être identiques. Par exemple, la première pièce et la deuxième pièce sont des céramiques de grenat de gallium gadolinium ou des céramiques de grenat de gallium ytterbium.

Les céramiques de grenat assemblées peuvent être différentes. Par exemple, la première pièce est une céramique de grenat de gallium gadolinium et la deuxième pièce est une céramique de grenat de gallium ytterbium, ou inversement.

Avantageusement, l'alliage d'apport est un alliage Ag-Cu contenant en outre de 1,75% à 4,5% en poids de titane.

Avantageusement, la composition massique de l'alliage d'apport est 63%Ag - 35.25 % Cu - 1.75% Ti, 70.56% Ag - 27.44% Cu - 2% Ti ou 68,8% Ag - 26,7% Cu - 4,5% Ti. De telles compositions sont, de préférence, utilisées pour les assemblages homogènes.

Avantageusement, la composition des brasures est supérieure à 2% en poids de titane, à savoir la composition est 70.56% Ag - 27.44% Cu - 2% Ti ou 68,8% Ag - 26,7% Cu - 4,5% Ti. De telles compositions sont, de préférence, utilisées pour les assemblages hétérogènes.

Avantageusement, l'étape c) est réalisée sous vide, sous atmosphère réductrice ou sous atmosphère inerte.

Avantageusement, lors de l'étape c), la température est maintenue à une température supérieure à la température du liquidus de l'alliage d'apport, pendant une durée comprise entre 15 secondes et 5 minutes et, de préférence, entre 1 minute et 3 minutes.

Le procédé présente de nombreux avantages :
- être simple à mettre en oeuvre : il n'y a pas besoin de mettre en oeuvre d'étape de métallisation et il n'y a pas besoin de traitement particulier de la céramique (comme par exemple une étape pour augmenter la rugosité de surface de la céramique),
- pouvoir être mis en oeuvre avec différentes brasures,
- pouvoir être mis en oeuvre pour des assemblages homogènes ou des assemblages hétérogènes.

L'invention concerne également un assemblage obtenu selon le procédé précédemment décrit, comprenant successivement une première pièce en céramique de grenat de gallium, un alliage d'apport et une deuxième pièce en cuivre ou en céramique de grenat de gallium, l'alliage d'apport étant un alliage Ag-Cu contenant en outre de 0,5% à 6% en poids de titane, de préférence de 0,5% à 5% en poids de titane, et encore plus préférentiellement de 1,75% à 4,5% en poids de titane. Les teneurs supérieures à 2% en poids de titane sont préférées pour les assemblages hétérogènes.

Avantageusement, l'alliage d'apport est 63%Ag - 35.25 % Cu - 1.75% Ti, 70.56% Ag - 27.44% Cu - 2% Ti ou 68,8% Ag - 26,7% Cu - 4,5% Ti. Les teneurs supérieures à 2% en Ti sont préférées pour les brasages hétérogènes.

Avantageusement, la première pièce est une céramique de grenat de gallium gadolinium ou une céramique de grenat de gallium ytterbium et la deuxième pièce est en cuivre.

La brasure permet de solidariser les deux pièces l'une à l'autre.

L'assemblage obtenu présentant une bonne tenue mécanique. Il n'est pas détérioré lors de chocs thermiques de 300 K à 77K dans l'azote liquide.

L'assemblage hétérogène grenat de gallium/cuivre présente une forte conductivité thermique.

Un tel assemblage est avantageusement utilisé en tant que noyau d'un réfrigérateur à désaimantation adiabatique ('Adiabatic demagnetization refrigerator' ou ADR).

L'invention concerne également un dispositif de refroidissement, par exemple un réfrigérateur à désaimantation adiabatique, comprenant un assemblage tel que défini précédemment.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
La figure 1 représente de manière schématique, et en coupe, un assemblage comprenant deux pièces assemblées par brasage, selon un mode de réalisation particulier de l'invention.
La figure 2 représente de manière schématique, et en coupe, un assemblage comprenant trois pièces assemblées par brasage, selon un autre mode de réalisation particulier de l'invention.
La figure 3 est un graphique représentant, de manière schématique, la température en fonction du temps lors d'un procédé d'assemblage par brasage, selon un mode de réalisation particulier de l'invention.
La figure 4 est un cliché photographique de deux pièces en céramique de grenat de gallium ytterbium assemblées avec une pièce en cuivre, selon un mode de réalisation particulier de l'invention.
La figure 5 est un cliché photographique de deux pièces en céramique de grenat de gallium ytterbium assemblées avec une pièce en cuivre, selon un autre mode de réalisation particulier de l'invention.
La figure 6 est un cliché photographique d'un test de trempe sur un assemblage obtenu selon un mode de réalisation particulier de l'invention.
La figure 7 est un cliché photographique d'une pièce en céramique de grenat de gallium gadolinium assemblée avec une pièce en cuivre, selon un mode de réalisation particulier de l'invention.
La figure 8 est un cliché obtenu au microscope électronique à balayage d'une interface de réaction grenat YbGG/brasure obtenue pour un assemblage YbGG/TiCusil^{®}/Cu, selon un mode de réalisation particulier de l'invention.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

En outre, dans la description ci-après, des termes qui dépendent de l'orientation, tels que « dessus », «dessous », etc. d'une structure s'appliquent en considérant que la structure est orientée de la façon illustrée sur les figures.

### EXPOSÉ DÉTAILLÉ DE MODES DE RÉALISATION PARTICULIERS

Le procédé consiste à assembler une première pièce en céramique de grenat de gallium avec une deuxième pièce en cuivre (assemblage hétérogène) ou deux pièces en céramique de grenat de gallium (assemblage homogène).

L'invention trouve des applications dans le domaine de l'énergie, du spatial et de la cryogénie. Ce procédé est particulièrement intéressant pour fabriquer un noyau d'un dispositif de refroidissement.

Par céramique, on entend les céramiques dites techniques à base d'oxydes (aussi appelées céramiques oxydes). Une céramique est un ensemble de grains partiellement coalescés. Par partiellement coalescés, on entend que certains grains sont coalescés et d'autres grains ne sont pas coalescés.

Les grains ont différentes dimensions et sont séparés par des joints de grains. Les joints de grains délimitent des zones ayant différentes orientations cristallines. Autrement dit, les orientations cristallines de deux grains, adjacents et disposés de part et d'autre d'un joint de grains, sont différentes.

Les céramiques sont fabriquées par frittage.

Les céramiques sont des matériaux solides et denses. Avantageusement, la céramique a une densité supérieure à 80% et strictement inférieure à 100%. De préférence, la céramique a une densité supérieure ou égale à 90% et strictement inférieure à 100%, et de préférence supérieure ou égale à 95% et strictement inférieure à 100%. Plus la densité de la céramique est élevée et plus la conductivité thermique sera élevée. Une densité élevée permet de maximiser l'effet frigorifique.

Les céramiques présentent des propriétés mécaniques particulièrement élevées, et ne se clivent pas, contrairement aux monocristaux. De telles céramiques sont particulièrement avantageuses pour des applications spatiales car elles peuvent résister aux contraintes mécaniques du décollage.

Par grenat de gallium, on entend un matériau oxyde de formule générale A'₃Ga'₂(Ga'O₄)₃, et, avantageusement, un matériau de formule A'₃Ga'₅O₁₂ avec :

A' correspondant à une ou plusieurs terres rares, de préférence choisies parmi l'erbium, le dysprosium, l'ytterbium et/ou le gadolinium ; préférentiellement il s'agit d'ytterbium ou de gadolinium, éventuellement substitué par de l'erbium ou du dysprosium.

Selon une première variante avantageuse, la céramique est une céramique de grenat de gallium gadolinium. Ce grenat est aussi appelé « gadolinium gallium garnet » (GGG). Ce grenat est particulièrement intéressant pour obtenir des températures froides de 500 mK à 4 K, à partir d'une source chaude de 2 à 10 K.

Selon une deuxième variante avantageuse, le grenat est une céramique de grenat de gallium ytterbium (YbGG). Ce matériau est particulièrement adapté pour des températures froides de l'ordre de 100 mK à 1 K. Il peut être utilisé à partir d'une source chaude de 300 mK à 4 K.

Les matériaux à base de céramique de grenat paramagnétique, notamment les GGG ou YbGG permettent d'obtenir des dispositifs de refroidissement efficace tout en étant facile d'intégration et mécaniquement résistant.

La pièce en cuivre a une forte conductivité thermique, ce qui permet d'assurer les échanges thermiques. Cet élément est également appelé bus thermique.

La pièce en cuivre peut être sous la forme de fils. Il peut également s'agir d'une plaque.

Nous allons maintenant décrire plus en détail le procédé d'assemblage de la première pièce 10 en céramique de grenat de gallium avec la deuxième pièce 20 en cuivre ou en céramique de grenat de gallium.

Le procédé comprend les étapes suivantes :
a) nettoyer la première pièce 10 en céramique de grenat de gallium et/ou la deuxième pièce 20 en cuivre ou en céramique de grenat de gallium,
b) mettre en contact un alliage d'apport 30 avec la première pièce 10 et avec la deuxième pièce 20, l'alliage d'apport 30 étant un alliage Ag-Cu contenant en outre de 0,5% à 6% en poids de titane, et de préférence de 0,5% à 5% en poids de titane,
c) chauffer l'ensemble obtenu jusqu'à une température supérieure à la température du liquidus de l'alliage d'apport 30, de manière à faire fondre l'alliage d'apport 30,
puis refroidir l'ensemble jusqu'à une température inférieure à la température du liquidus de l'alliage d'apport 30, par exemple jusqu'à la température du solidus de l'alliage d'apport 30, et de préférence jusqu'à la température ambiante.

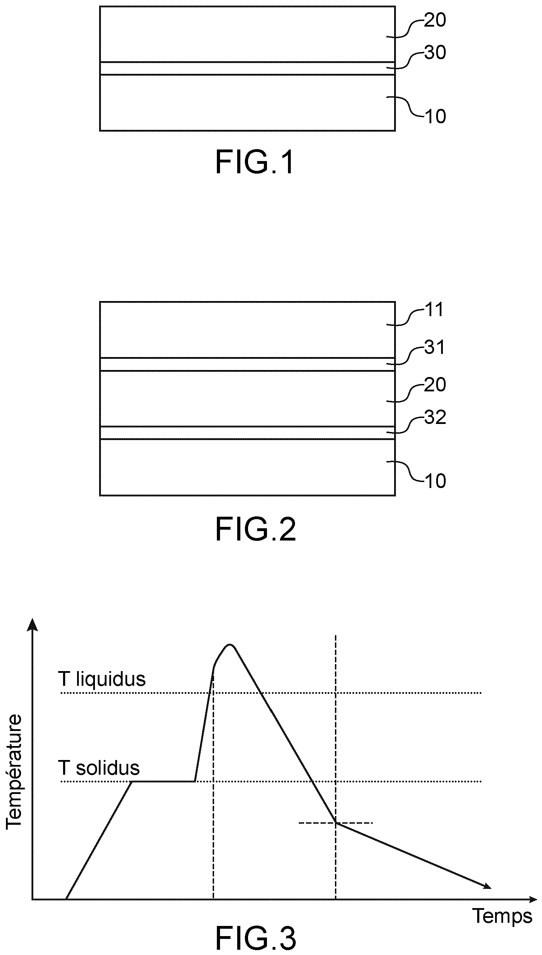

A l'issue du procédé, on obtient une première pièce 10 assemblée avec une deuxième pièce 20 au moyen d'un joint de brasage 30 (figure 1).

Le procédé peut également être mis en oeuvre pour braser simultanément deux premières pièces 10, 11 avec une deuxième pièce 20, au moyen de deux joints de brasage 30, 31 (figure 2). Il pourrait également être mis en oeuvre pour braser une première pièce avec plusieurs deuxièmes pièces ou encore pour braser plusieurs premières pièces avec plusieurs deuxièmes pièces.

L'étape a) du procédé est une étape de nettoyage. De préférence, au moins la ou les pièces en céramiques de grenat de gallium sont nettoyées. Une telle étape conduit à une bonne surface d'accroche, améliore le mouillage de la céramique de grenat par la brasure et facilite ainsi l'étape d'assemblage finale. L'étape de nettoyage permet notamment d'éliminer toute trace de graisse. Pour cela, l'étape de nettoyage comprend par exemple les sous-étapes successives suivantes :
- plonger les pièces dans un mélange d'acétone et d'éthanol en proportion 1:1,
- passer les pièces aux ultrasons pendant quelques minutes,
- plonger les pièces dans de l'éthanol,
- passer les pièces aux ultrasons,
- sécher les pièces.

Lors de l'étape b), l'alliage d'apport 30 (aussi appelé ou brasure ou matériau d'apport) est positionné entre les pièces 10, 20 à assembler. L'alliage d'apport 30 est en contact direct avec les pièces à assembler 10, 20, autrement dit il n'y a pas d'élément intermédiaire entre l'alliage d'apport 30 et les pièces à assembler 10, 20.

L'alliage d'apport 30 est un matériau de type eutectique Ag-Cu contenant en outre l'élément actif Ti. Le taux de Ti est de 0,5% à 6% en poids de titane (par rapport à au poids total de l'alliage), et de préférence le taux de titane est de 0,5% à 4,5% en poids.

L'alliage d'apport est un alliage Ag-Cu contenant de préférence :
- de 1,75% à 4,5% en poids de titane pour les assemblages homogènes grenat/grenat, ou
- de 2% à 4,5% en poids de titane pour les assemblages hétérogènes grenat/cuivre.

La composition massique de l'alliage d'apport est, par exemple : 63%Ag - 35.25 % Cu - 1.75% Ti, 70.56% Ag - 27.44% Cu - 2% Ti ou 68,8% Ag - 26,7% Cu - 4,5% Ti.

De préférence, la première pièce est une céramique de grenat de gallium, la deuxième est en cuivre et la composition chimique de la brasure est : 68,8% Ag - 26,7% Cu - 4,5% Ti (% en poids).

L'alliage d'apport est intercalé entre les pièces à assembler. Suivant le type de géométrie des pièces mis en jeu, un outillage adapté pourra être utilisé en vue de maintenir ensemble le système première pièce/brasure/deuxième pièce lors des étapes b) et c). Toutefois, lorsque l'assemblage se fait dans une configuration plan-plan ou que les substrats sont de géométrie parallélépipédique, une simple masse posée au-dessus du montage suffit à le maintenir l'ensemble.

Lors de l'étape c), on procède au chauffage de l'ensemble obtenu jusqu'à une température d'assemblage suffisante pour faire fondre le matériau d'apport.

De préférence, la température d'assemblage est comprise entre la température de liquidus Tl du matériau d'apport et une température maximale Tmax, préférentiellement comprise entre Tl + 15°C et Tl + 25°C. Par exemple, on choisit une température Tmax = Tl + 20°C.

Le cycle de traitement thermique lors de l'étape c) comprend, et de préférence est constitué, des sous-étapes suivantes (figure 3):
- première montée en température jusqu'à une température Tm inférieure à la température du solidus de l'alliage d'apport et maintien de la température pour réaliser un palier d'homogénéisation, avantageusement court, par exemple à une température Tm telle que Tsolidus -50°C<Tm< Tsolidus,
- deuxième montée en température jusqu'à une température supérieure à la température de liquidus de l'alliage d'apport, et maintien de la température au-dessus de la température de liquidus pendant une durée de quelques secondes à une dizaine de minutes, de préférence pendant une durée de 1 minute à 10 minutes, encore plus préférentiellement pendant une durée de 1 minute à 5 minutes,
- premier refroidissement jusqu'à une température inférieure à la température de liquidus, et de préférence jusqu'à une température inférieure à la température du solidus de l'alliage d'apport, par exemple à une température inférieure de 100°c à la température du solidus de l'alliage d'apport,
- deuxième refroidissement jusqu'à la température ambiante.

Par température ambiante, on entend une température comprise entre 20 et 25°C.

Par exemple, dans le cas de l'assemblage d'une première pièce en céramique de grenat de gallium et d'une deuxième pièce en cuivre, avec un matériau d'apport de composition 68,8% Ag - 26,7% Cu - 4,5% Ti, commercialisé sous le nom Ticusil ^{®} (solidus à 780°C, liquidus à 899°C), le cycle du traitement thermique lors de l'étape c) peut comprendre, et de préférence être constitué, des sous-étapes suivantes :
- première montée en température à 5°C/min jusqu'à une température inférieure ou égale à la température du solidus de l'alliage d'apport (780°C) et maintien de la température pendant au moins 5 minutes à 780°C (palier d'homogénéisation),
- deuxième montée en température jusqu'à une température de 920°C à une vitesse de 15°C/min ou plus, et maintien de la température au-dessus de la température de liquidus pendant une durée de quelques minutes (typiquement de 1 minute à 5 minutes),
- premier refroidissement à une vitesse supérieure à 25°C/min (par exemple à une vitesse comprise entre 25°C/min et 30°C/min), jusqu'à une température inférieure de 50 à 100°C en dessous de la température du solidus de l'alliage d'apport puis maintien de la température pendant au moins 5 minutes,
- deuxième refroidissement de l'ensemble à une vitesse de 1 à 3 °C/minute jusqu'à la température ambiante.

Au moins deux types de matériau d'apport (ou brasure) correspondant à la composition 68,8% Ag - 26,7% Cu - 4,5% Ti (% massique) peuvent être utilisés pour le brasage :
- une brasure commerciale Ticusil^{®} de composition globale 68,8% Ag - 26,7% Cu - 4,5% Ti constituée de 3 couches superposées de matériaux différents Cusil^{®} /Ti/Cusil^{®} , c'est-à-dire 2 feuilles d'alliage de brasage Cusil^{®} avec au centre une feuille de Ti, laminées ou extrudées ensemble. La composition de l'alliage Cusil^{®} correspond à la composition: 72% Ag - 28% Cu, c'est-à-dire la composition de l'eutectique Ag-Cu. Cet alliage eutectique fond à 780°C. La brasure Ticusil^{®} va ainsi commencer à fondre partiellement quand l'alliage Cusil^{®} atteint 780°C (d'où T solidus =780°C pour la brasure Ticusil^{®} ), alors il y a dissolution du titane de la feuille centrale dans le liquide Ag-Cu. Ainsi, la température de liquidus est imposée par la dissolution totale du Ti métal intercalé entre les 2 couches d'alliage eutectique 72% Ag - 28% Cu (d'où T liquidus = 899°C pour la brasure Ticusil^{®} ).
- un alliage d'apport de composition 68,8% Ag - 26,7% Cu - 4,5% Ti « allié » dont la température de solidus et la température de liquidus correspondent strictement au composé chimiquement macro-homogène (solidus à 830°C, liquidus à 850°C). Dans ce cas le cycle de traitement thermique est composé d'une première montée en T°C jusqu' à 830°C, Tsolidus -50°C<Tm< Tsolidus et une seconde montée en température jusqu'à 870°C, Tl + 20°C.

Le support de brasage est, de préférence, en graphite pour imposer une atmosphère réductrice à haute température.

Le brasage peut être réalisé sous vide (par exemple un vide secondaire poussé de l'ordre de 10⁻⁶ mbar), sous atmosphère réductrice ou sous atmosphère inerte (gaz inerte pur tel que Ar).

Avantageusement, ce procédé d'assemblage est mis en oeuvre pour fabriquer un noyau d'un dispositif de régulation thermique, et notamment un noyau d'un dispositif de refroidissement.

En particulier, il peut s'agir d'un noyau d'un réfrigérateur à désaimantation adiabatique (ou ADR pour *« Adiabatic Demagnetization Refrigerator »*) spatial ou terrestre. Un tel dispositif est particulièrement adapté pour les très basses températures (inférieures ou égales à 10 K), notamment pour des applications de 100 mK à 10 K.

Le noyau pourrait également être utilisé dans un système de réfrigération magnétique active à régénération (ou AMRR pour *« Active Magnetic Regenerative Réfrigération »*)*.*

Le noyau peut comprendre une pièce ou plusieurs pièces en céramique brasées à une ou plusieurs pièces en cuivre. Par exemple, le noyau peut comprendre de 2 à 4 pièces en céramique de grenat de gallium (différentes ou de préférence identiques) brasées sur une pièce en cuivre.

### Exemples illustratifs et non limitatifs d'un mode de réalisation

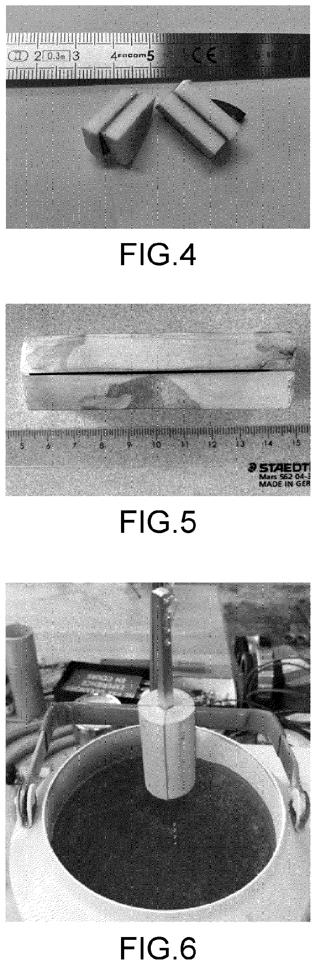

Les figures 4 et 5 représentent différents assemblages obtenus par brasage en configuration dite sandwich. Les assemblages sont des YbGG-Cu-YbGG, c'est-à-dire qu'ils comprennent deux pièces en céramique de grenat de gallium ytterbium et une pièce centrale en cuivre. Une brasure commerciale Ticusil^{®} (Ag 68,8% - Cu 26,7% et Ti 4,5%). Des pièces de différentes dimensions ont été assemblées.

Les brasures suivantes ont également été testées (% en masse) :
- Cusil^{®} : 72% Ag - 28% Cu
- BrazTi0,5% : 71,64%Ag- 27,86%Cu-0,5%Ti, préparée en laboratoire,
- Incusil ABA^{®} : 59,0% Ag - 27,25% Cu - 12,5% In - 1,25% Ti
- CusilABA^{®} : 63 % Ag - 35,25% Cu - 1,75% Ti
- BrazTi 2% : 70,56% Ag- 27,44% Cu - 2%Ti, préparée en laboratoire,
- Ticusil^{®} : 68,8% Ag - 26,7% Cu - 4,5% Ti

Une teneur nulle en Ti ne permet pas de mouiller la céramique YbGG.

Les autres brasures contenant du titane permettent de mouiller la céramique. Au-delà de 1,75% Ti, on observe un meilleur mouillage.

Dans l'exemple qui va suivre, un noyau YbGG-Cu a été fabriqué par brasage de 4 pièces en céramique sur un élément en cuivre.

Pour cela, dans un premier temps les pièces (ou substrats) en céramique de grenat et un élément métallique ont été nettoyées. Le nettoyage est un nettoyage en deux étapes :
- Nettoyage dans un mélange de 50% d'acétone et 50% d'éthanol avec passage de quelques minutes aux ultrasons,
- Nettoyage à l'éthanol et passage de quelques minutes aux ultrasons.

Puis l'étape de mise en contact des substrats a été mise en oeuvre de sorte que la brasure soit intercalée entre les substrats en céramique et l'élément métallique. L'ensemble est maintenu par un outillage adapté au type de géométrie des substrats. L'alliage d'apport est constitué de 68,8% Ag, 26,7%, Cu et de 4,5% Ti (tous les pourcentages étant en poids) avec T solidus = 780°C et T Liquidus = 899°C.

Le brasage de l'assemblage est réalisé à Tl + 20°C, soit à une température d'environ 920°C sous vide secondaire, sous atmosphère inerte ou sous atmosphère réductrice. Le cycle de traitement thermique se décompose comme suit :
- Rampe de montée de 5°C/min jusqu'à une température de 780°C température du solidus de l'alliage d'apport (780°C) puis palier de 5 minutes,
- Rampe de Montée de 15°C/min jusqu'à une température supérieure à la température du liquidus de l'alliage d'apport, ici jusqu'à une température de 920°C, et maintien de la température au-dessus de la température du liquidus pendant 3 minutes 30,
- Rampe de descente rapide de 27°C/min jusqu'à une température inférieure à la température du solidus, ici jusqu'à une température de 680°C puis palier de 5 minutes,
- Rampe de descente lente de 1°C/minute jusqu'à l'ambiante.

La longueur brasée est de 80 mm, la largeur brasée est de 15 mm et le diamètre du noyau final est de 30 mm.

L'assemblage Noyau YbGG/Cuivre brasé a été soumis à une « trempe » thermique à basse température (figure 6). Ce test mécanique « critique » consiste à soumettre l'assemblage à des chocs thermiques de 300 K à 77K dans l'azote liquide, avec une vitesse de refroidissement de 80K/h. Ceci permet de tester la résistance mécanique des différentes interfaces brasées YbGG/Cu. A l'issue de la phase de test, aucune rupture n'a été observée sur les 8 interfaces de brasages de l'assemblage. Le noyau présente une bonne résistance mécanique.

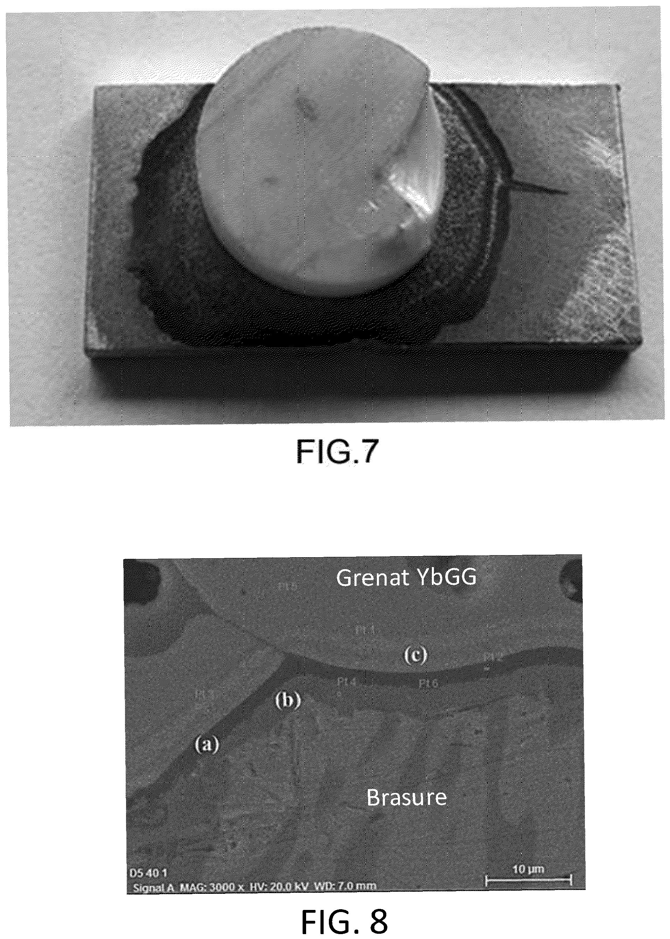

Le brasage d'une pièce en céramique de grenat de gallium gadolinium sur une pièce en cuivre a également été réalisé avec la brasure TiCuSil. Le cycle de traitement thermique est le même que celui précédemment décrit. L'assemblage obtenu présente également une bonne tenue mécanique (figure 7).

L'interface YbGG/brasure d'un assemblage YbGG/TiCuSil^{®}/Cu a été observée (figure 8).

La composition chimique des différentes couches de réaction est donnée dans le tableau suivant :

| **Couche** | **Epaisseur** | **Composition chimique (% atomique)** | | | | | |
|---|---|---|---|---|---|---|---|
| | | O | Ti | Cu | Ga | Ag | Yb |
| (a) | 1 µm | 61.5 | 38.5 | | | | |
| (b) | 1,5 µm | 22.09 | 38.72 | 26.95 | 9.34 | 2.46 | 0.44 |
| (c) | | 43.16 | 0.34 | 1.23 | 15.85 | 20.57 | 18.84 |

Les lettres des couches dans le tableau correspondent aux différentes couches réactionnelles indiquées sur la figure 8.

L'analyse montre que des éléments du grenat de gallium entrent dans le mécanisme de formation des couches et que de l'oxygène libéré du grenat de gallium est également impliqué. Ceci n'est pas le cas avec un assemblage mettant en oeuvre un grenat d'aluminium : les couches de réaction obtenues pour ces deux grenats sont de natures différentes car les mécanismes réactionnels seront différents.

L'analyse des couches de réaction montre la présence d'une couche unique d'oxyde pur de titane (couche (a)).

## Revendications

1. Procédé d'assemblage par brasage d'une première pièce (10) en céramique de grenat de gallium et d'une deuxième pièce (20) en cuivre ou en céramique de grenat de gallium, le procédé comprenant les étapes suivantes :
a) nettoyer la première pièce (10) en céramique de grenat de gallium et/ou la deuxième pièce (20) en cuivre ou en céramique de grenat de gallium,
b) mettre en contact un alliage d'apport (30) avec la première pièce (10) et avec la deuxième pièce (20), l'alliage d'apport (30) étant un alliage Ag-Cu contenant en outre de 0,5% à 6% en poids de titane, et de préférence de 0,5% à 5% en poids de titane,
c) chauffer l'ensemble obtenu jusqu'à une température supérieure à la température du liquidus de l'alliage d'apport (30), de manière à faire fondre l'alliage d'apport (30), puis refroidir l'ensemble jusqu'à une température inférieure à la température du liquidus de l'alliage d'apport (30), et de préférence jusqu'à la température ambiante.

2. Procédé selon la revendication 1, **caractérisé en ce que** l'alliage d'apport (30) est un alliage Ag-Cu contenant en outre de 1,75% à 4,5% en poids de titane.

3. Procédé selon la revendication 2, **caractérisé en ce que** la composition massique de l'alliage d'apport est 63%Ag - 35.25 % Cu - 1.75% Ti, 70.56% Ag - 27.44% Cu - 2% Ti ou 68,8% Ag - 26,7% Cu - 4,5% Ti.

4. Procédé selon l'une des revendications 1 à 3, **caractérisé en ce que** l'étape c) de brasage est réalisée sous vide, sous atmosphère réductrice ou sous atmosphère inerte.

5. Procédé selon l'une quelconque des revendications 1 à 4, **caractérisé en ce que** la première pièce (10) est une céramique de grenat de gallium gadolinium et **en ce que** la deuxième pièce (20) est en cuivre.

6. Procédé selon l'une quelconque des revendications 1 à 4, **caractérisé en ce que** la première pièce (10) est une céramique de grenat de gallium ytterbium et **en ce que** la deuxième pièce (20) est en cuivre.

7. Procédé selon l'une quelconque des revendications précédentes, **caractérisé en ce que**, lors de l'étape c), la température est maintenue à une température supérieure à la température du liquidus de l'alliage d'apport (30), pendant une durée comprise entre 15 secondes et 5 minutes et, de préférence, entre 1 minute et 3 minutes.

8. Assemblage obtenu selon le procédé selon l'une quelconque des revendications précédentes, comprenant successivement une première pièce (10) en céramique de grenat de gallium, un alliage d'apport (30) et une deuxième pièce (20) en cuivre ou en céramique de grenat de gallium, l'alliage d'apport (30) étant un alliage Ag-Cu contenant en outre de 0,5% à 6% en poids de titane, et de préférence de 1,75% à 4,5% en poids de titane.

9. Assemblage selon la revendication précédente, **caractérisé en ce que** l'alliage d'apport (30) est 63%Ag - 35.25 % Cu - 1.75% Ti, 70.56% Ag - 27.44% Cu - 2% Ti ou 68,8% Ag - 26,7% Cu - 4,5% Ti.

10. Assemblage selon l'une des revendications 8 et 9, **caractérisé en ce que** la première pièce (10) est une céramique de grenat de gallium gadolinium ou une céramique de grenat de gallium ytterbium et **en ce que** la deuxième pièce (20) est en cuivre.

11. Dispositif de refroidissement, par exemple un réfrigérateur à désaimantation adiabatique, comprenant un assemblage selon la revendication 10.
